# EUROPEAN PATENT APPLICATION

(11) **EP 4 822 400 A1**
(43) Date of publication of application: **14.10.2026**
(21) Application number: 26171178.2
(22) Date of filing: 08.04.2026
(51) Int. Cl.: G01S 17/931, G01S 7/41, G01S 7/48, G01S 7/51, G01S 13/52, G01S 13/931, G01S 17/50, G06V 10/48, G06V 20/56, G01S 7/04, G01S 13/50

(54) **POINT CLOUD-BASED GUARDRAIL RECOGNITION DEVICE AND METHOD**

(30) Priority: 10.04.2025 KR 20250046532
(71) Applicant: bitsensing Inc, Seongnam-si, Gyeonggi-do 13105 (KR)
(72) Inventor: SONG, Heemang, 06959 Seoul (KR)
(74) Representative: Plougmann Vingtoft a/s

(57) **Abstract**

The present disclosure relates to a point cloud-based guardrail recognition device and method using Hough transform, and includes filtering, from point cloud data collected through a LiDAR sensor or a radar sensor, only point cloud data related to stationary objects, performing a Hough transform on point cloud data related to each stationary object and selecting a valid guardrail candidate group exceeding a threshold from each Hough transform result, distinguishing between a straight line and a curve based on an area of the selected guardrail candidate group, acquiring line information by calculating a slope and a y-intercept from one or a plurality of representative (r, θ) values obtained from the Hough transform according to a result of the distinguishing, and recognizing a position and a direction of the guardrail using the acquired line information, where the distance r is a shortest distance between a line and an origin, and the angle θ is an angle representing a slope of the line.

## Description

### BACKGROUND

The present disclosure relates to an advanced driver assistance system (ADAS), and more particularly to a point cloud-based guardrail recognition device and method using a Hough transform.

As interest in autonomous driving has begun to increase, technologies for assisting vehicle driving through various sensors (a camera, a radar, and a light detection and ranging (LiDAR)) have been developed and distributed.

Among the technologies for assisting vehicle driving, path planning and free-space detection require recognition of a road shape as a first step. In order to recognize the road shape, above all, recognition of a guardrail is required, and when a camera is used as a means for recognizing the guardrail, there are limitations in performance in adverse weather or in a situation in which a field of view is not secured. Accordingly, a need to use the radar or LiDAR, separately from the camera, has begun to emerge.

In autonomous driving, since a guardrail representing a road shape serves to separate a road boundary from risk factors, a technology for accurately recognizing the guardrail is required to enable safe travel of an autonomous vehicle.

Recognition of the guardrail enables the autonomous vehicle to plan and control a safe path, thereby playing an important role in enhancing safety and reliability of autonomous driving. This is because the guardrail or the wall may cause a ghost track (incorrect track). In particular, when the guardrail has a symmetrical shape, the ghost track may appear symmetrically on an opposite side with respect to the guardrail.

For example, when the radar incorrectly detects the guardrail, a signal reflected from a completely different location from an actual object is detected, and this may generate an incorrect track. In this case, when it is possible to accurately recognize guardrail information, the guardrail information may assist in removing the ghost track or identifying a correct track.

As an example, the guardrail may be recognized through vehicle path optimization and a safe path may be calculated so that a vehicle does not deviate from a road by reflecting the recognition of the guardrail. Further, a technology for applying an algorithm for adjusting a speed or a direction of an autonomous vehicle in real time so that the vehicle does not collide with a guardrail has also been employed.

Various algorithms for recognizing a road shape through lane recognition or guardrail recognition using a camera sensor have been developed. However, a camera has a limitation in adverse weather or in a situation in which a field of view is not secured. Accordingly, technologies for recognizing a guardrail based on a radar or a LiDAR point clouds separately from the camera have been introduced.

In general, an autonomous vehicle may recognize an obstacle (a guardrail, another vehicle, a pedestrian, or the like) and a free space around the vehicle through a point cloud and modify a driving path or establish path planning based thereon.

Since a point cloud includes a large number of points, techniques for grouping the points are required to efficiently process the point cloud. To this end, a clustering technique is used to group points having similar characteristics into one group to recognize an obstacle, a road, or another object.

In technologies for recognizing a guardrail based on the radar or a LiDAR point cloud, the guardrail is recognized through a process of clustering the point cloud, extracting information regarding a straight line or a curve from a distribution of the clustered point cloud, and performing a post-processing process.

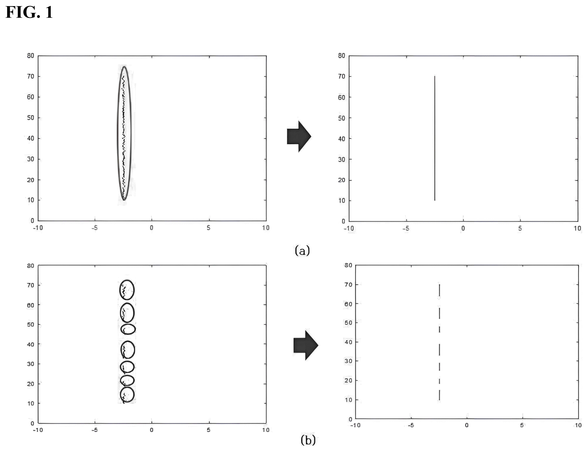

When a density of the point cloud is high as illustrated in (a) of FIG. 1, a point cloud corresponding to the guardrail is generated as one cluster and guardrail recognition is well performed, but when the density of the point cloud is low as illustrated in (b) of FIG. 1, the point cloud corresponding to the guardrail is generated into a plurality of clusters and thus there is a limitation in that the guardrail is generated in parts, which causes a need to additionally perform post-processing.

In the case of a LiDAR sensor, a point cloud is formed at a relatively high density and difficulty may occur in clustering, and in the case of a radar sensor, a density of a point cloud is not sufficient and a phenomenon in which the point cloud is periodically measured occurs, and therefore a case in which clustering is difficult may occur. In this case, it is difficult to extract line information, and in order to determine whether a cluster corresponds to a straight line or a curve from cluster information about the point cloud, a separate algorithm may need to be additionally provided.

As described above, when a density of a point cloud is not sufficiently high or clustering is not properly performed, there is a limitation in extracting accurate line information. Further, in order to accurately recognize a guardrail, determination as to whether a cluster of a point cloud corresponds to a straight line or a curve is required.

Examples of the related art include Korean Patent No. 10-1655682 and Korean Patent Application Publication No. 10-2024-0111593.

### SUMMARY

The present disclosure provides a device and a method capable of recognizing a guardrail regardless of a density of a point cloud and without separate clustering.

The present disclosure also provides a point cloud-based guardrail recognition device and method capable of directly determining whether a guardrail is a straight line or a curve from a result of a Hough transform.

In order to achieve the above-described objects, a point cloud-based guardrail recognition method of an advanced driver assistance system according to an embodiment of the present disclosure includes:
filtering, from point cloud data collected through a light detection and ranging (LiDAR) sensor or a radar sensor, only point cloud data related to stationary objects,
performing a Hough transform on point cloud data related to each stationary object and selecting a valid guardrail candidate group exceeding a threshold from each Hough transform result,
distinguishing between a straight line and a curve based on an area of the selected guardrail candidate group,
acquiring line information by calculating a slope and a y-intercept from one or a plurality of representative (r, θ) values obtained from the Hough transform according to a result of the distinguishing, and
recognizing a position and a direction of the guardrail using the acquired line information,
where the distance r is a shortest distance between a line and an origin, and
the angle θ is an angle representing a slope of the line.

Further, in the point cloud-based guardrail recognition method of an advanced driver assistance system described above, the filtering of only the point cloud data related to the stationary objects includes
extracting only point cloud data having a velocity opposite to a velocity of an host vehicle from the point cloud data collected through the radar sensor, or
tracking the point cloud data collected through the LiDAR sensor over time and extracting only cloud data having an unchanged position.

Further, as a result of distinguishing between the straight line and the curve based on an area of the selected guardrail candidate group, the slope and the y-intercept are calculated from one representative (r, θ) value for the straight line, and from a plurality of representative (r, θ) values for the curve.

Meanwhile, a point cloud-based guardrail recognition device of an advanced driver assistance system according to an embodiment of the present disclosure includes
a data filtering unit configured to filter, from point cloud data collected through a LiDAR sensor or a radar sensor, only point cloud data related to stationary objects,
a valid guardrail selecting unit configured to perform a Hough transform on point cloud data related to each stationary object and select a valid guardrail candidate group exceeding a threshold from each Hough transform result,
a guardrail shape identifying unit configured to distinguish between a straight line and a curve based on an area of the selected guardrail candidate group,
a line information acquiring unit configured to acquire line information by calculating a slope and a y-intercept from one or a plurality of representative (r, θ) values obtained from the Hough transform according to a result of the distinguishing, and
a guardrail recognizing unit configured to recognize a position and a direction of the guardrail using the acquired line information, where the distance r is a shortest distance between a line and an origin, and the angle θ is an angle representing a slope of the line.

In the point cloud-based guardrail recognition device of the advanced driver assistance system, the data filtering unit, the valid guardrail selecting unit, the guardrail shape identifying unit, the line information acquiring unit, and the guardrail recognizing unit constitute a set of application program code data for recognizing the guardrail and are stored in a memory of the advanced driver assistance system and executed by a controller.

According to the present disclosure, since clustering of point cloud data is performed through the Hough transform, the present disclosure has an advantage in that a guardrail can be recognized without a separate clustering process for clustering the point cloud data.

Further, the present disclosure has an advantage in that a guardrail can be recognized by accurately acquiring line information through a series of processes through the Hough transform regardless of a density of point cloud data, and a determination as to whether the guardrail is a straight line or a curve can be directly determined from a result of the Hough transform.

### BRIEF DESCRIPTION OF THE DRAWINGS

FIG. 1 is an exemplary diagram of a density of point cloud data;
FIG. 2 is a diagram illustrating an example configuration of a point cloud-based guardrail recognition device according to an embodiment of the present disclosure;
FIG. 3 is an example flow diagram of point cloud-based guardrail recognition according to an embodiment of the present disclosure; and
FIGS. 4 to 6 are diagrams for describing a Hough transform result according to the embodiment of the present disclosure.

### DETAILED DESCRIPTION OF EMBODIMENTS

The following detailed description of the present disclosure will be discussed with reference to the accompanying drawings, which show by way of illustration a specific embodiment in which the present disclosure may be practiced, in order to make the objects, technical solutions and advantages of the present invention clearer. These embodiments are described in sufficient detail to enable those skilled in the art to practice the present disclosure.

Furthermore, throughout the present description and claims, the word "comprise" and variations thereof are not intended to exclude other technical features, additions, components or steps. Other objects, advantages and characteristics of the present disclosure will appear to a person skilled in the art, in part from this description, and in part from practice of the present disclosure. The following examples and drawings are provided by way of illustration and are not intended to limit the present disclosure. Moreover, the present disclosure encompasses all possible combinations of the embodiments indicated herein. It should be understood that the various embodiments of the present disclosure are different but need not be mutually exclusive. In addition, it should be understood that the location or arrangement of individual components within each disclosed embodiment may be changed without departing from the spirit and scope of the present disclosure. Accordingly, the detailed description set forth below is not intended to be taken in a limiting sense, and the scope of the present disclosure, if properly described, is limited only by the appended claims, along with all equivalents to those claimed.

Meanwhile, in the present specification, unless otherwise indicated or clearly contradicted by context, items referred to in the singular encompass the plural, unless the context requires otherwise. Furthermore, in describing the present disclosure, when it is determined that the detailed description of the related known technology or function may obscure the subject matter of the present description, the detailed description thereof will be omitted. Further, among terms used below, an object and an entity are assumed to have the same meaning.

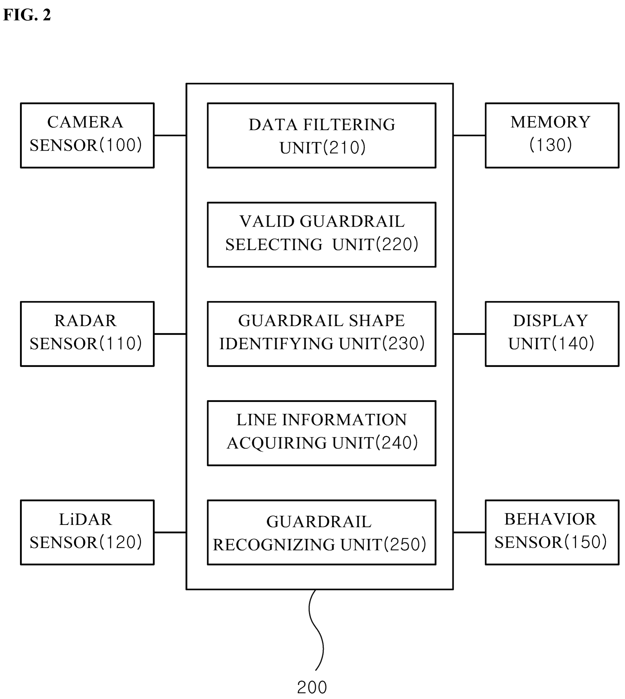

FIG. 2 illustrates a diagram of a configuration of a point cloud-based guardrail recognition device according to an embodiment of the present disclosure, and the point cloud-based guardrail recognition device according to the embodiment of the present disclosure may constitute a part of an advanced driver assistance system (ADAS) or a driving assistance system. Hereinafter, it is assumed that the advanced driver assistance system and the driving assistance system have the same meaning.

Referring to FIG. 2, first, a camera sensor 100 captures images of surroundings of a vehicle and acquires image data around the vehicle. The camera sensor 100 includes a plurality of lenses and an image sensor. An image processor included in a controller 200 to be described below acquires image data through the camera sensor 100 and detects and identifies an object around the vehicle based on processing of the image data.

In general, a radar sensor or a LiDAR sensor may provide velocity information about each object, and through the velocity information, it is possible to ascertain whether the object is in a stationary state or in a moving state. For example, a stationary object has velocity information with a value close to zero, whereas a moving object has a velocity in a consistent direction. A radar point cloud includes information on the distance, reflection intensity, and velocity of an object. In order to recognize a guardrail that is a stationary object, the point cloud collected by the radar may be filtered based on the velocity information.

The radar may regard an object exhibiting a velocity in a direction opposite to that of a host vehicle as a stationary object based on host vehicle velocity information. Since the stationary object exhibits the velocity in the direction opposite to that of the host vehicle, only point cloud having a velocity opposite to the velocity of the host vehicle is filtered so that an object corresponding to the guardrail may be extracted. For example, when the host vehicle travels north, the guardrail that is a stationary object exhibits a velocity in a southward direction, which is a direction opposite to the velocity of the host vehicle heading north, and only stationary objects may be extracted based on the direction of the velocity.

A radar sensor 110 according to an embodiment of the present disclosure transmits radar signals toward surroundings of the vehicle and processes radar signals reflected from surrounding objects to acquire a plurality of sets of point cloud data forming one object and transmit the plurality of sets of point cloud data to the controller 200 to be described below. The point cloud data acquirable through the radar sensor 110 includes information on the distance, reflection intensity, and the velocity of an object. The controller 200 to be described below may regard an object exhibiting a velocity in a direction opposite to that of the host vehicle as a stationary object by using the velocity information included in the radar point cloud data.

Meanwhile, in the case of the LiDAR, a point cloud is mainly generated based on the distance and reflection intensity, but since velocity information is not present, filtering needs to be performed by an additional method. Accordingly, a moving object may be extracted by continuously tracking LiDAR data over time. For example, points whose positions change across multiple frames are regarded as a moving object, and the guardrail that is a stationary object having an unchanged position may be filtered.

An object whose position or shape does not change in a specific section even after time passes has a high possibility of being a stationary object, and objects that do not change in this manner may be recognized as the guardrail. For this purpose, an algorithm for tracking changes of a point cloud over time is required.

In addition, the guardrail may also be recognized by performing shape-based fitting on LiDAR data. For example, an object having a straight line or a flat surface has a high probability of being the guardrail. In this manner, the guardrail may be identified using a shape or geometric characteristics.

A LiDAR sensor 120 according to an embodiment of the present disclosure acquires point cloud data including distance information about objects (a guardrail, a pedestrian, a tree, and the like) according to a point scanning method and transmits the point cloud data to the controller 200, which will be described below. The LiDAR sensor 120 is installed at a front surface of the vehicle and measures point cloud data for a front terrain and features.

As described above, only stationary objects may be distinguished using velocity information collected through the LiDAR sensor or the radar sensor, and in this way, fixed objects such as a guardrail or a road boundary may be extracted.

In addition to filtering, post-processing (clustering, shape fitting, and the like) is required to analyze a point cloud more accurately.

Objects including the guardrail may be grouped into one object by clustering point cloud data, and in this way, an overall shape of an object rather than individual points may be determined. Since a guardrail generally has a structure forming a straight line or a predetermined curve, the guardrail may be recognized through shape fitting corresponding to such a shape. For example, the guardrail may be detected through line fitting or plane fitting.

Further, a region in which the guardrail is located may be precisely analyzed by performing 3D modeling on a point cloud, and in this way, an autonomous vehicle may recognize the guardrail more accurately and may establish a path safely from an obstacle.

More accurate guardrail recognition becomes possible by using post-processing such as clustering and shape fitting as described above.

The controller 200 generally controls the operation of the advanced driver assistance system or a vehicle driving device based on a set of control program code data or a set of application program code data stored in the memory 130.

For example, the controller 200 may filter, from the point cloud data collected through the LiDAR sensor 120 or the radar sensor 110, only point cloud data related to stationary objects, perform a Hough transform on point cloud data related to each stationary object, select a valid guardrail candidate group exceeding a threshold from each Hough transform result, distinguish between a straight line and a curve based on an area of the selected guardrail candidate group, and then acquire line information by calculating a slope and a y-intercept from one or a plurality of representative (r, θ) values obtained from the Hough transform according to a result of the distinguishing, thereby recognizing a position and a direction of the guardrail.

That is, a result of the Hough transform may include many guardrail candidate groups, and such candidate groups may be filtered using a threshold so that only valid guardrail candidate groups may be selected. For example, a plurality of candidates in a form of a straight line may be obtained, and incorrect candidate groups may be removed by selecting only valid straight lines exceeding the threshold among the plurality of candidates.

In general, the Hough transform is an algorithm mainly used for collecting data in sensor equipment of a vehicle and recognizing a lane, a road boundary line, and a guardrail or extracting a shape of a road, and a shape of the road such as a straight line or a curve may be recognized through the Hough transform.

3D data may be collected through a point cloud from the sensor such as the radar or LiDAR, and the shape of the road may be extracted by applying the Hough transform based on the 3D data. The radar or LiDAR sensor transmits data to High Performance Computing (HPC) that is a central processing system of the autonomous vehicle. The radar or LiDAR sensor may transmit collected data to HPC instead of directly processing the collected data, and various algorithms including the Hough transform may be performed in the HPC.

Since the HPC has powerful computing capability, data collected by a plurality of sensors including the radar, the LiDAR, and the camera may be simultaneously integrated and analyzed. In this manner, the guardrail or the road boundary may be extracted by processing the point cloud data and applying the Hough transform in the HPC. Since processing of all data is performed in one HPC, HPC may be regarded as having a function of a guardrail recognition processor.

The controller 200 may implement logical functional blocks illustrated in FIG. 2 in a form of hardware, in a form of software, or in a combined form of hardware and software.

Further describing the logical functional blocks described above, a data filtering unit 210 filters, from the point cloud data collected through the LiDAR sensor 120 or the radar sensor 110, only point cloud data related to stationary objects.

More specifically, the data filtering unit 210 extracts only point cloud data having a velocity opposite to that of the host vehicle from the point cloud data collected by the radar sensor 110 to obtain only the point cloud data related to stationary objects.

When the point cloud data is collected through the LiDAR sensor 120, the data filtering unit 210 may obtain only point cloud data related to stationary objects by tracking the collected point cloud data over time and extracting only point cloud data having an unchanged position.

A valid guardrail selecting unit 220 performs a Hough transform on point cloud data related to each stationary object and selects a valid guardrail candidate group exceeding (equal to or greater than) a threshold from each Hough transform result.

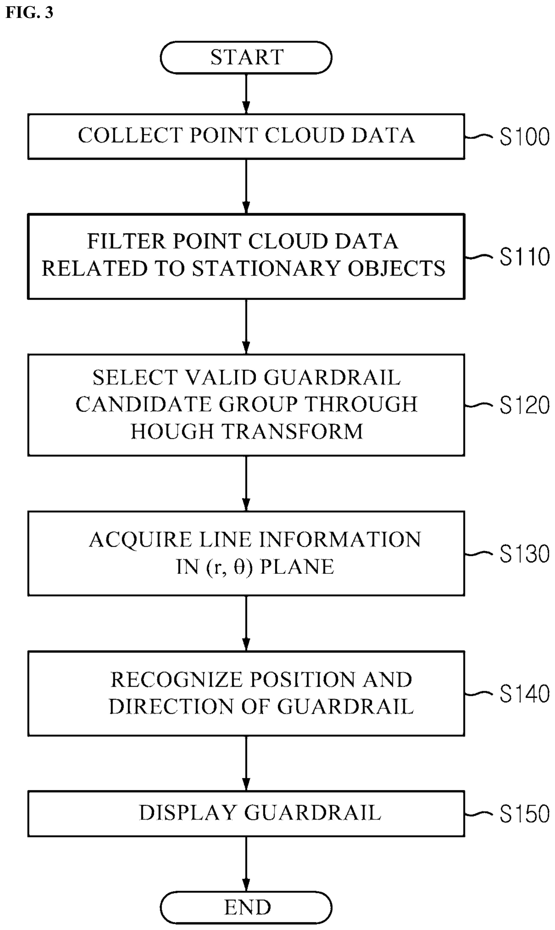

Meanwhile, a guardrail shape identifying unit 230 distinguishes between and identifies a straight line and a curve based on an area of the selected guardrail candidate group. For reference, a narrow region may correspond to a straight line, whereas a wide region may correspond to a curve. This will be further described with reference to FIG. 3.

A line information acquiring unit 240 calculates a slope a and a y-intercept b from one or a plurality of representative (r, θ) values obtained from the Hough transform according to a result of the distinguishing by the guardrail shape identifying unit 230 and reversely acquires line information y=ax+b. The distance r is a shortest distance between the line and an origin, and the angle θ is an angle representing a slope of the line. Through this line information, an accurate position and a direction of the guardrail may be identified, and a driving path and a safety distance of the vehicle may be calculated.

For reference, a ghost is a phenomenon in which an incorrect path (track) is generated regardless of an actual object. For example, the radar may incorrectly detect a stationary object such as the guardrail, the wall, or the like and generate a ghost track (incorrect track). When the line information is acquired, the position of the stationary object such as the guardrail or the road boundary line may be accurately determined. In this way, incorrect detection of the guardrail as the ghost track by the radar may be prevented. The accurate position of the stationary object may be determined and the ghost track may be effectively removed.

Further, the line information is required to accurately recognize and display the guardrail. Since the guardrail generally has a straight and uniform form, the position of the guardrail may be easily determined and recognized through the line information. In this way, the guardrail may be correctly identified, and information that helps the autonomous vehicle travel safely may be provided.

A guardrail recognizing unit 250 recognizes a position and a direction of the guardrail using the acquired line information. The guardrail recognizing unit 250 may display the acquired guardrail line information on a display unit 140 through shape fitting such as line fitting or plane fitting. The acquired guardrail line information may be used for path planning, free-space detection, and the like in the driving assistance system.

Path planning is a process of calculating a path along which the autonomous vehicle is required to travel to reach a target point. The process aims to find an optimal path along which the vehicle may travel based on an initial position and a target position of the vehicle.

Free-space detection is a technology for recognizing a free space on a road in which the autonomous vehicle may travel. A free space refers to a region in which the vehicle may safely travel, and free-space detection is a process of finding a region outside an obstacle or a road boundary. The process is particularly important for obstacle avoidance and autonomous driving path setting.

A memory 130 temporarily stores data received from various sensors 100, 110, and 120 and stores a set of control program code data and a set of application program code data required for the driving assistance system, and temporarily stores data generated during operation of the advanced driver assistance system. The memory 130 may include not only volatile memory but also nonvolatile memory.

The display unit 140 displays information required for driving assistance (e.g., driving information, the guardrail, a warning message, a map, and the like) under control of the controller 200.

A behavior sensor 150 includes a vehicle speed sensor, an acceleration sensor, and a gyro sensor and acquires information on a velocity, an acceleration, and an angular velocity of the vehicle and provides the acquired information to the controller 200.

Hereinafter, operations of the point cloud-based guardrail recognition device including the above-described components will be further described with reference to FIGS. 3 to 6.

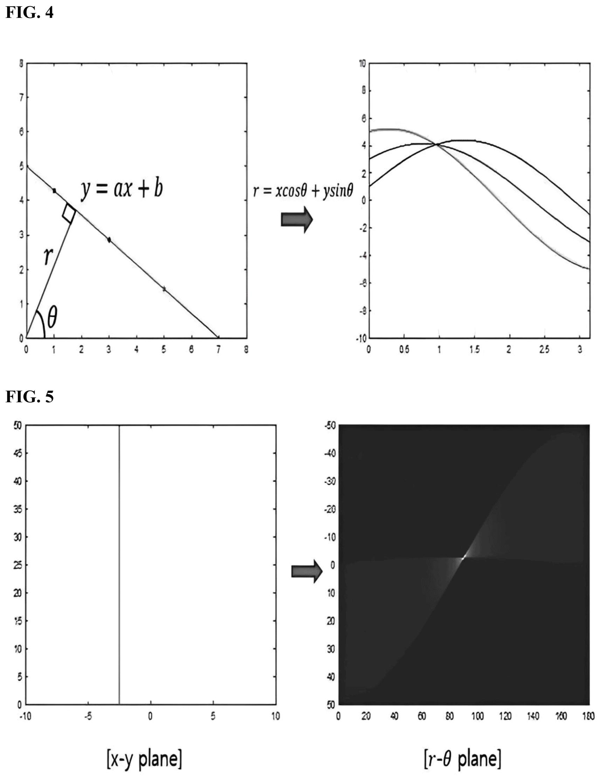

FIG. 3 is an example flow diagram of point cloud-based guardrail recognition according to an embodiment of the present disclosure, and FIGS. 4 to 6 illustrate diagrams for describing a Hough transform result according to the embodiment of the present disclosure.

Referring to FIG. 3, first, the data filtering unit 210, which is one component of the controller 200, collects point cloud data through the LiDAR sensor 120 or the radar sensor 110 (step S100), and then filters only point cloud data related to stationary objects from the collected point cloud data (step S110).

Since the point cloud data collected through the radar sensor 110 includes distance, reflection intensity, and velocity information about objects, in order to extract only data related to a guardrail corresponding to a stationary object, only the point cloud data related to the stationary objects may be filtered using velocity information included in the point cloud data collected by the radar sensor 110 and velocity information collected through the behavior sensor 150. That is, the data filtering unit 210 extracts only point cloud data having a velocity opposite to that of the host vehicle from the point cloud data collected by the radar sensor 110.

When point cloud data is collected through the LiDAR sensor 120, the data filtering unit 210 continuously tracks the point cloud data collected by the LiDAR sensor 120 over time (through a plurality of frames) and extracts only cloud data having an unchanged position.

When the point cloud data related to stationary objects is filtered, the valid guardrail selecting unit 220 performs a Hough transform on point cloud data related to each stationary object and selects a valid guardrail candidate group exceeding a threshold from each Hough transform result (step S120).

More specifically, when each coordinate of a point cloud related to a stationary object is (x, y), the valid guardrail selecting unit 220 converts the coordinate into a curve in an (r, θ) plane through the following equation. That is, as illustrated in FIG. 4, each (x, y) coordinate of point cloud data is converted into a curve in the (r, θ) plane through the Hough transform, and when all point cloud data is expressed, an overlapped point occurs, and when the overlapped point is expressed as a 2D result, a result as illustrated in FIG. 5 may be obtained. $r = xcosθ + ysinθ ,$ and a range of θ is [0, 180] degrees.

Subsequently, the valid guardrail selecting unit 220 performs binarization by applying a threshold to the Hough transform result of each coordinate. The binarization is a process of expressing data only as 0 and 1. For example, a result exceeding a predetermined threshold is represented as 1 (existence), and a result not exceeding the predetermined threshold is represented as 0 (non-existence), and thus only important information may be extracted.

That is, when the Hough transform result is equal to or greater than the predetermined threshold (indicated as "1"), the corresponding shape is recognized as a straight line or a curve and is selected as a candidate in the valid guardrail candidate group, and when the Hough transform result is less than the predetermined threshold (indicated as "0"), the shape is excluded from candidate group.

For reference, as a method for determining the threshold, a two-dimensional constant false alarm rate (2D CFAR) algorithm may be used. A constant false alarm rate (CFAR) algorithm is a method for minimizing a false alarm. That is, the CFAR algorithm is an algorithm for reducing a false signal under a given condition, and the 2D CFAR algorithm may be used to extract reliable data for a straight line or a curve by applying the CFAR algorithm in a two-dimensional space.

When the valid guardrail candidate group is selected, the guardrail shape identifying unit 230 identifies a shape of the guardrail by distinguishing between the straight line and the curve based on a continuous area of the selected guardrail candidate group.

The continuous area may be determined based on how wide and how narrow a region indicated as 1 is in the binarized result. For example, a narrow region may be a straight line, and a wide region may be a continuous curve. A continuity of the straight line or the curve may be determined through the difference.

That is, in order to evaluate the continuity of the straight line or the curve extracted through the Hough transform, a method for distinguishing an unbroken shape may be applied using binarization and the CFAR algorithm.

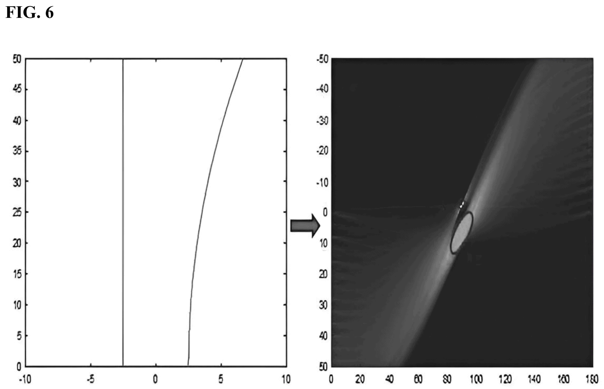

In the case of the straight line, as illustrated in FIG. 6, Hough-transformed (r, θ) values are distributed in a narrow region in the (r, θ) plane, and in the case of the continuous curve, the Hough-transformed (r, θ) values have a characteristic of being distributed in a wide region, and thus the guardrail shape identifying unit 230 may identify the shape of the guardrail including the straight line and the curve based on an area of the selected candidate group. As a criterion for determining the narrow region and the wide region, a boundary box having an area predetermined in advance may be used.

For reference, as can be seen through the above-described steps, it can be understood that the guardrail recognition device and method according to the embodiment of the present disclosure perform clustering of point cloud data through the Hough transform without a separate clustering process for point cloud data.

Meanwhile, the line information acquiring unit 240 may acquire line information (step S130) by calculating a slope and a y-intercept from one or a plurality of representative (r, θ) values obtained from the Hough transform according to a result of distinguishing between the straight line and the curve.

That is, the line information acquiring unit 240 may inversely acquire line information (y = ax+b) by calculating the slope a and the y-intercept b from the following equation using one or a plurality of representative (r, θ) values.$a = - \frac{cosθ}{sinθ} , b = \frac{r}{sinθ}$

The distance r is a shortest distance between the line and an origin, and the angle θ is an angle representing a slope of the line.

Subsequently, the guardrail recognizing unit 250 recognizes a position and a direction of the guardrail (step S140) using one or more pieces of line information acquired through the line information acquiring unit 240 and uses the position and the direction to calculate a driving path and a safety distance of the vehicle.

In some cases, the guardrail recognizing unit 250 may transmit acquired guardrail line information to a post-processing unit so that the acquired guardrail line information is displayed on the display unit 140 through shape fitting such as line fitting or plane fitting, and may directly perform shape fitting and display the acquired guardrail line information on the display unit 140. Further, the acquired guardrail line information may be used for ghost track removal and may be used for path planning and free-space detection, and may be transmitted to a controller for controlling the autonomous vehicle so that the autonomous vehicle may safely autonomously travel.

As described above, since clustering of point cloud data is performed through the Hough transform, the present disclosure has an advantage in that a guardrail can be recognized without a separate clustering process for clustering the point cloud data.

Further, the present disclosure has an advantage in that a guardrail can be recognized by accurately acquiring line information through a series of processes through a Hough transform regardless of a density of point cloud data, and whether the guardrail is a straight line or a curve can be directly determined from a result of the Hough transform.

Although the present disclosure has been described above with reference to embodiments illustrated in the drawings, these embodiments are merely illustrative, and those skilled in the art will appreciate that various modifications and equivalent other embodiments could be made possible therefrom. Accordingly, a true technical protection scope of the present disclosure should be determined by the technical spirit of the appended claims.

## Claims

1. A point cloud-based guardrail recognition method of an advanced driver assistance system, comprising:
filtering, from point cloud data collected through a light detection and ranging (LiDAR) sensor or a radar sensor, only point cloud data related to stationary objects;
performing a Hough transform on point cloud data related to each stationary object and selecting a valid guardrail candidate group exceeding a threshold from each Hough transform result;
distinguishing between a straight line and a curve based on an area of the selected guardrail candidate group;
acquiring line information by calculating a slope and a y-intercept from one
or a plurality of representative (r, θ) values obtained from the Hough transform according to a result of the distinguishing; and
recognizing a position and a direction of the guardrail using the acquired line information,
where the distance r is a shortest distance between a line and an origin, and the angle θ is an angle representing a slope of the line.

2. The point cloud-based guardrail recognition method of claim 1, wherein the filtering of only the point cloud data related to stationary objects comprises extracting only point cloud data having a velocity opposite to a velocity of a host vehicle from the point cloud data collected through the radar sensor.

3. The point cloud-based guardrail recognition method of claim 1, wherein the filtering of only the point cloud data related to stationary objects comprises tracking the point cloud data collected through the LiDAR sensor or the radar sensor over time and extracting only cloud data having an unchanged position.

4. The point cloud-based guardrail recognition method of claim 1, wherein as a result of distinguishing between the straight line and the curve based on an area of the selected guardrail candidate group, the slope and the y-intercept are calculated from one representative (r, θ) value for the straight line, and are calculated from a plurality of representative (r, θ) values for the curve.

5. The point cloud-based guardrail recognition method of claim 1, further comprising displaying the acquired line information on a display unit through shape fitting including line fitting or plane fitting.

6. A point cloud-based guardrail recognition device of an advanced driver assistance system, comprising:
a data filtering unit configured to filter, from point cloud data collected through a LiDAR sensor or a radar sensor of the advanced driver assistance system, only point cloud data related to stationary objects;
a valid guardrail selecting unit configured to perform a Hough transform on point cloud data related to each stationary object and select a valid guardrail candidate group exceeding a threshold from each Hough transform result;
a guardrail shape identifying unit configured to distinguish between a straight line and a curve based on an area of the selected guardrail candidate group;
a line information acquiring unit configured to acquire line information by calculating a slope and a y-intercept from one or a plurality of representative (r, θ) values obtained from the Hough transform according to a result of the distinguishing; and
a guardrail recognizing unit configured to recognize a position and a direction of the guardrail using the acquired line information,
where the distance r is a shortest distance between a line and an origin, and the angle θ is an angle representing a slope of the line.

7. The point cloud-based guardrail recognition device of claim 6, wherein the data filtering unit, the valid guardrail selecting unit, the guardrail shape identifying unit, the line information acquiring unit, and the guardrail recognizing unit constitute a set of application program code data for recognizing the guardrail and are stored in a memory of the advanced driver assistance system and executed by a controller.
